# EUROPÄISCHE PATENTANMELDUNG

(11) **EP 2 320 206 A1**
(43) Veröffentlichungstag der Anmeldung: **11.05.2011**
(21) Anmeldenummer: 10190311.0
(22) Anmeldetag: 08.11.2010
(51) Int. Cl.: G01J 5/00, G01J 5/04, G01J 5/08, G01J 5/02

(54) **Elektronisches Strahlungsfieberthermometer**

(30) Priorität: 09.11.2009 DE 102009052300
(71) Anmelder: Paul Hartmann Aktiengesellschaft, 89522 Heidenheim (DE)
(72) Erfinder: Malowaniec, Krzysztof-Daniel, 89522, Heidenheim (DE); Wegner, Ronny, 89233, Neu-Ulm (DE)
(74) Vertreter: Dreiss

(57) **Zusammenfassung**

Die Erfindung betrifft ein elektronisches Strahlungsfieberthermometer (2) für die nichtinvasive Temperaturmessung am menschlichen Körper, mit einem Thermometergehäuse (4), mit einem einen Strahlungssensor (8) zur Erfassung einer Temperatur umfassenden Messkopf (6) und mit einer elektronischen Recheneinrichtung (14), die aus einem Messwert des Strahlungssensors (8) einen Wert der Körpertemperatur ermittelt, der mittels einer Anzeigeeinrichtung (16) anzeigbar ist, wobei das Thermometer zur Temperaturmessung an zwei voneinander verschiedenen Stellen am menschlichen Körper, insbesondere im Ohr und auf der Stirn, ausgebildet ist, wofür in der elektronischen Recheneinrichtung (14) verschiedene Auswertealgorithmen vorgesehen sind, wobei entweder der Messkopf (6) zwischen einer ersten Arbeitsposition zur Temperaturmessung an der ersten Stelle und einer zweiten Arbeitsposition zur Temperaturmessung an der zweiten Stelle gegenüber dem Thermometergehäuse (4) zwangsgeführt verbringbar ist oder wobei eine den Messkopf (6) gegen Streustrahlung abschirmende Komponente (10) zwischen einer ersten Arbeitsposition zur Temperaturmessung an der ersten Stelle und einer zweiten Arbeitsposition zur Temperaturmessung an der zweiten Stelle gegenüber dem Thermometergehäuse (4) und dem Messkopf (6) zwangsgeführt verbringbar ist, und wobei beim Verbringen des Messkopfs (6) oder der abschirmenden Komponente (10) in die eine oder andere Arbeitsposition der zu der betreffenden Arbeitsposition gehörige Algorithmus bei der Recheneinrichtung (14) automatisch durch eine Stelleinrichtung (18) vorgegeben wird.

## Beschreibung

Die Erfindung betrifft ein elektronisches

Strahlungsfieberthermometer für die nichtinvasive Temperaturmessung am menschlichen Körper, mit einem Thermometergehäuse, mit einem einen Strahlungssensor zur Erfassung einer Temperatur umfassenden Messkopf und mit einer elektronischen Recheneinrichtung, die aus einem Messwert des Strahlungssensors einen Wert der Körpertemperatur ermittelt, der mittels einer Anzeigeeinrichtung anzeigbar ist, wobei das Thermometer zur Temperaturmessung an zwei voneinander verschiedenen Stellen am menschlichen Körper, insbesondere im Ohr und auf der Stirn, ausgebildet ist, wofür in der elektronischen Recheneinrichtung verschiedene Auswertealgorithmen vorgesehen sind.

Infrarot-Strahlungsfieberthermometer sind als Alternative zu seit vielen Jahrzehnten bekannten klassischen Quecksilberthermometern zur Fiebermessung heute vielfach im Einsatz. Sie sind hinsichtlich der Messgeschwindigkeit und der Ablesbarkeit herkömmlichen Quecksilberthermometern überlegen und bieten weitere Vorteile. Bei der Temperaturmessung ist zwischen der sogenannten Kerntemperatur im Inneren des menschlichen Körpers bzw. Blutkreislaufs und der peripheren Temperatur zu unterscheiden, die messtechnisch erfasst wird. Die Temperaturdifferenzen sind hierbei nicht unwesentlich, weshalb es für die Beurteilung des Gesundheitszustandes höchst relevant ist, dass anhand der Temperaturmessung zuverlässig auf die Kerntemperatur des Körpers geschlossen werden kann. Aus diesem Grund ist es bereits bekannt, bei elektronischen Infrarot-Strahlungsfieberthermometern in der Recheneinrichtung verschiedene Auswertealgorithmen zu hinterlegen. Dabei ist ein Algorithmus für die Temperaturnahme im Ohr und ein anderer Algorithmus für die Temperaturnahme auf der Stirn ausgelegt.

Der Begriff des Algorithmus oder Auswertealgorithmus ist vorliegend im weitesten Sinn zu verstehen. Auch wenn sich die zum Einsatz kommenden Berechnungsabläufe bei den Algorithmen nicht grundsätzlich sondern beispielsweise nur hinsichtlich der Parameterwahl unterscheiden, werden sie vorliegend als verschiedene Auswertealgorithmen betrachtet.

Gemäß DE 199 29 503 B4 wird ein solches Thermometer beschrieben, wobei für die Messung im Ohr und für die Messung an der Stirn unterschiedlich geformte Messaufsätze auf das Thermometergehäuse aufgesetzt werden müssen, was umständlich ist und die Gefahr von Fehlbedienungen mit sich bringt.

Der vorliegenden Erfindung liegt die Aufgabe zugrunde, ein Strahlungsfieberthermometer der eingangs genannten Art weiter dahingehend zu verbessern, dass es bedienungsfreundlicher handhabbar ist und dass Fehlbedienungen, insbesondere im Hinblick auf die korrekte Wahl des Auswertealgorithmus, ausgeschlossen werden können.

Diese Aufgabe wird bei einem Strahlungsfieberthermometer der genannten Art erfindungsgemäß dadurch gelöst, dass entweder der Messkopf zwischen einer ersten Arbeitsposition zur Temperaturmessung an der ersten Stelle und einer zweiten Arbeitsposition zur Temperaturmessung an der zweiten Stelle gegenüber dem Thermometergehäuse zwangsgeführt verbringbar ist oder dass eine den Messkopf gegen Streustrahlung abschirmende Komponente zwischen einer ersten Arbeitsposition zur Temperaturmessung an der ersten Stelle und einer zweiten Arbeitsposition zur Temperaturmessung an der zweiten Stelle gegenüber dem Thermometergehäuse und dem Messkopf zwangsgeführt verbringbar ist, und dass beim Verbringen des Messkopfs oder der abschirmenden Komponente in die eine oder andere Arbeitsposition der zu der betreffenden Arbeitsposition gehörige Algorithmus bei der Recheneinrichtung automatisch durch eine Stelleinrichtung vorgegeben wird.

Es werden also keine vom Thermometergehäuse bestimmungsgemäß lösbaren bzw. aufsetzbaren Komponenten verwendet, die leicht verlierbar sind oder unkorrekt aufgebracht werden können. Stattdessen wird der Messkopf oder die abschirmende Komponente jeweils zwangsgeführt und damit während des bestimmungsgemäßen Gebrauchs unverlierbar am Thermometergehäuse gehalten. Dadurch dass bei der anspruchsgemäßen Herrichtung des Thermometers für die eine oder andere Betriebsart an der einen bzw. der anderen Stelle des Körpers automatisch der zugehörige korrekte Algorithmus vorgegeben wird, ist eine Fehlbedienung sicher ausgeschlossen. Dies erweist sich gerade in Situationen der Anwendung bei Kindern oder unter erschwerten Bedingungen, wenn z. B. bei einem nachtschlafenden Kind die Körpertemperatur gemessen werden soll, als vorteilhaft, da lediglich der Messkopf oder alternativ die abschirmende Komponente in die bestimmungsgemäß durch Zwangsführung vorgegebene betreffende Arbeitsposition gebracht, insbesondere verschoben, verdreht oder verschwenkt zu werden braucht, wobei gleichzeitig der korrekte Auswertealgorithmus vorgegeben wird. Der Benutzer gibt also lediglich die Arbeitsposition vor (z. B. für Ohrmessung oder bei schlafenden Kindern für Stirnmessung) und kann sich der korrekten Temperaturbestimmung sicher sein.

In weiterer Ausbildung der Erfindung wird vorgeschlagen, dass über eine Ausgabeeinrichtung eine Meldung an den Benutzer erfolgt, wenn der zu der betreffenden Arbeitsposition gehörige Algorithmus bei der Recheneinrichtung automatisch durch die Stelleinrichtung vorgegeben ist. Der Benutzer kann dann infolge der Meldung sicher sein, dass der korrekte Mess- bzw. Auswertemodus bei der Recheneinrichtung vorgegeben ist. Die Ausgabe kann in an sich beliebiger Weise, vorzugsweise akustisch und/oder optisch erfolgen. Beispielsweise kann hierfür die vorzugsweise visuell und/oder akustisch arbeitende Anzeigeeinrichtung für die Angabe der ermittelten Körpertemperatur oder eine hiervon verschiedene Ausgabeeinrichtung verwendet werden.

Die Betriebssicherheit kann in Weiterbildung der Erfindung weiter dadurch erhöht werden, dass eine typischerweise elektronisch erfolgende Betriebsfreigabe für die sensorbasierte Messwertnahme durch die Stelleinrichtung erst dann erfolgt, wenn der Messkopf oder die abschirmende Komponente seine betreffende erste oder zweite Arbeitsposition erreicht hat.

Es erweist sich außerdem als vorteilhaft, wenn die abschirmende Komponente, die ja lediglich Streustrahlung, welche die Messwerterfassung oder -auswertung beeinflussen und damit verfälschen könnte, zuverlässig abschirmen soll, wenn das Thermometer an eine äußere Körperoberfläche, beispielsweise die Stirn, angelegt wird, zugleich eine Anlagefläche des Thermometers gegen die betreffende Stelle am Körper ausbildet. Sie ist hierfür zweckmäßigerweise mit einer ergonomisch verrundeten, insbesondere konkav gewölbten Oberfläche versehen, in der eine Öffnung zum Einleiten der durch das Sensormittel zu erfassenden Strahlung vorgesehen ist.

Vorteilhafterweise ist die abschirmende Komponente hülsenförmig ausgebildet, wobei sie den Messkopf umfangseitig und/oder stirnseitig umgibt oder begrenzt und somit gegen Streustrahlung abschirmt.

Nach einer zweckmäßigen und vorteilhaften Ausführungsform der Erfindung ist die abschirmende Komponente oder der Messkopf mit dem Thermometergehäuse teleskopierend angeordnet.

Nach einer weiteren zweckmäßigen und vorteilhaften Ausführungsform der Erfindung ist die abschirmende Komponente oder der Messkopf gegenüber dem Thermometergehäuse verschieblich, insbesondere linear verschieblich, angeordnet, was eine besonders leichte Bedienbarkeit durch eine Schieberbetätigung mittels des Daumens oder eines anderen Fingers der das Thermometer haltenden Hand des Benutzers ermöglicht.

Nach einer weiteren zweckmäßigen und vorteilhaften Ausführungsform der Erfindung ist die abschirmende Komponente oder der Messkopf gegenüber dem Thermometergehäuse verschwenkbar angeordnet.

Nach einer weiteren zweckmäßigen und vorteilhaften Ausführungsform der Erfindung ist die abschirmende Komponente oder der Messkopf gegenüber dem Thermometergehäuse drehbar, insbesondere um eine Mittelachse des Thermometergehäuses, angeordnet, wobei mit der Drehung der abschirmenden Komponente oder des Messkopfs zugleich eine axiale Verlagerung senkrecht zur Drehebene einhergeht. Dies kann beispielsweise durch einen wendel- oder spiralförmigen Gewindegang realisiert werden. Es kann sich auch als vorteilhaft erweisen, wenn die abschirmende Komponente oder der Messkopf gegenüber dem Thermometergehäuse über eine Kulissenführung verstellbar angeordnet ist.

Im Hinblick auf eine einfache Bedienbarkeit erweist es sich als vorteilhaft, wenn die abschirmende Komponente oder der Messkopf durch manuelle Betätigung von der einen in die andere Arbeitsposition verbringbar ist. Insbesondere kann die abschirmende Komponente oder der Messkopf mittels eines Fingers der das Thermometer ergreifenden Hand manuell verstellt werden, also insbesondere verschoben, verschwenkt oder verdreht werden, wobei auch eine Federunterstützung in Frage kommt, derart dass sich die manuelle Betätigung auf einen Auslöse- oder Freigabevorgang beschränkt, infolgedessen die abschirmende Komponente oder der Messkopf federkraftunterstützt in die eine oder andere Arbeitsposition verbracht wird. Auch die manuelle Betätigung einer elektromotorischen Schiebe-, Dreh- oder - Schwenkeinrichtung ist denkbar.

Nach einem weiteren Erfindungsgedanken erweist es sich als vorteilhaft, wenn die eingangs erwähnte Stelleinrichtung zur Vorgabe des zu der betreffenden Arbeitsposition gehörigen Algorithmus ebenfalls manuell dadurch betätigbar ist, dass die vorausgehend erwähnte manuelle Betätigung zur Verbringung der abschirmenden Komponente oder des Messkopfs zugleich die Stelleinrichtung betätigt. Weiter wäre es denkbar, dass die Stelleinrichtung erst in der Folge durch die abschirmende Komponente oder den Messkopf selbst, d. h. durch deren Verlagerung, betätigbar ist. Dies kann in an sich beliebiger zweckmäßiger Weise erfolgen, und vorzugsweise dadurch, dass die Stelleinrichtung mechanisch, optisch, magnetisch oder elektrisch mit der abschirmenden Komponente oder dem Messkopf zusammenwirkt. Beispielsweise wäre es denkbar, dass die Stelleinrichtung ein durch den verlagerbaren Messkopf oder die verlagerbare abschirmende Komponente verdrängbares Stellmittel aufweist, welches dann automatisch in eine Umschaltstellung gebracht wird, wenn die abschirmende Komponente bzw. der Messkopf in eine Arbeitsposition verbracht wird.

Im Hinblick auf eine komfortable Handhabbarkeit erweist es sich weiter als vorteilhaft, wenn das Thermometergehäuse einen beim bestimmungsgemäßen Gebrauch umgreifbaren Gehäusebereich und einen messkopfseitigen Gehäusebereich aufweist, die gegeneinander geneigt sind. Auf diese Weise lässt sich eine ergonomische körpergerecht geneigte Ausbildung des Thermometergehäuses erreichen, die gut in der Hand liegt und sich in besonderem Maße für die Ohrmessung und die Stirnmessung eignet. Hierbei erweist es sich als zweckmäßig und vorteilhaft, wenn der umgreifbare Gehäusebereich
und der messkopfseitige Gehäusebereich einen Neigungswinkel von 10° - 60°, insbesondere von 20° - 55°, insbesondere von 30° - 50° und weiter insbesondere von 40° - 50° zueinander einschließen.

Es erweist sich als besonders vorteilhaft, wenn die zwangsgeführte Anordnung der den Messkopf abschirmenden Komponente oder die zwangsverschiebliche Anordnung des Messkopfs selbst an dem messkopfseitigen Gehäusebereich realisiert ist, so dass der umgreifbare messkopfabgewandte Gehäusebereich im Hinblick auf die Ergonomie beim Ergreifen des Thermometers optimiert ausgelegt werden kann.

Weitere Merkmale, Einzelheiten und Vorteile der Erfindung ergeben sich aus den beigefügten Patentansprüchen und der zeichnerischen Darstellung und nachfolgenden Beschreibung bevorzugter Ausführungsformen der Erfindung. In der Zeichnung zeigt:
- Figur 1: eine Frontansicht einer ersten Ausführungsform eines erfindungsgemäßen Strahlungsfieberthermometers, wobei eine abschirmende Komponente in zwei Arbeitspositionen dargestellt ist;
- Figur 2: eine Seitenansicht des Strahlungsfieberthermometers nach Figur 1 in den zwei Arbeitspositionen;
- Figur 3: eine zweite Ausführungsform eines erfindungsgemäßen Strahlungsfieberthermometers, wobei ein Messkopf in zwei verschiedenen Arbeitspositionen dargestellt ist;
- Figur 4: eine Seitenansicht des Strahlungsfieberthermometers nach Figur 3 in den zwei Arbeitspositionen;
- Figur 5: eine schematische Darstellung eines Verstellmechanismus für eine abschirmende Komponente eines Strahlungsfieberthermometers und
- Figur 6: eine schematische Darstellung eines weiteren Verstellmechanismus für einen Messkopf eines Strahlungsfieberthermometers.

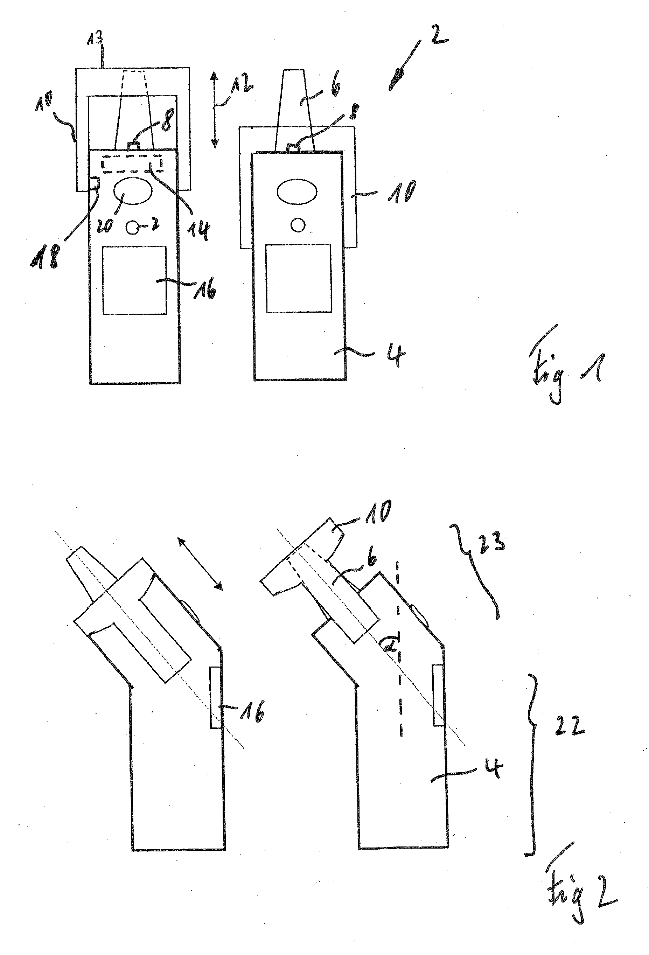

Figuren 1 und 2 zeigen eine erste Ausführungsform eines insgesamt mit dem Bezugszeichen 2 bezeichneten Strahlungsfieberthermometers. Das Strahlungsfieberthermometer 2 umfasst ein Thermometergehäuse 4 und einen Messkopf 6, der bei dieser Ausführungsform des Thermometers ortsfest am Thermometergehäuse 4 vorgesehen ist und einen Strahlungssensor 8 aufweist, der jedoch hinsichtlich Ausbildung und Anordnung im Messkopf 6 lediglich schematisch angedeutet ist. Des Weiteren umfasst das Fieberthermometer 2 eine abschirmende Komponente 10, die in zwei Arbeitspositionen dargestellt ist und zwischen diesen Arbeitspositionen in Richtung des Doppelpfeils 12 zwangsgeführt und damit unverlierbar am Thermometergehäuse 4 hin- und herverbracht werden kann. In der in Figur 1 linken Darstellung ist die abschirmende Komponente in einer gegenüber dem Thermometergehäuse 4 ausgefahrenen Arbeitsposition dargestellt, in der sie den Messkopf 6 in Umfangsrichtung umgibt und bis auf eine Öffnung auch stirnseitig abdeckt. Auf diese Weise ist eine Abschirmung gegen die Messung störende Streustrahlung geschaffen. Die abschirmende Komponente 10 bildet dabei eine nur schematisch dargestellte Anlagefläche 13 zum Anlegen des Fieberthermometers an eine Körperoberfläche, z. B. an die Stirn. Die abschirmende Komponente 10 weist in ihrer Anlagefläche 13 eine Öffnung auf, durch welche zu messende Wärmestrahlung in das Innere des Messkopfs 6 und damit zu dem Strahlungssensor 8 gelangen kann, wenn eine Temperaturmessung im an die Körperoberfläche angelegten Zustand des Thermometers 2 ausgeführt werden soll.

In der in Figur 1 rechten Darstellung ist die abschirmende Komponente 10 in ihre zweite Arbeitsposition gebracht, in der der Messkopf 6 freigegeben ist. In dieser Arbeitsposition der abschirmenden Komponente 10 kann das Fieberthermometer 2 für eine Ohrmessung verwendet werden, indem der entsprechend ergonomisch geformte Messkopf 6 in die Ohröffnung eingeführt und dabei nahe am Trommelfell positioniert wird. In dieser Position wird dann der Temperaturmesswert genommen.

Im Inneren des Thermometergehäuses 4 ist außerdem eine in Figur 1 links schematisch angedeutete Recheneinrichtung 14 vorgesehen, welche mit dem Strahlungssensor 8 zusammenwirkt und die vom Strahlungssensor 8 erhaltenen Messsignale weiter verarbeitet und mittels einer an sich beliebigen, insbesondere visuellen oder optischen, Anzeige- oder Ausgabevorrichtung, im beispielhaft dargestellten Fall einer Displayeinrichtung 16, zur Anzeige bringt. In der Recheneinrichtung 14 sind verschiedene Algorithmen für die Messwertverarbeitung hinterlegt, die für den jeweiligen Messort des Thermometers 2, also für die Ohrmessung oder Stirnmessung, verschieden ausgebildet sind, mit dem Ziel, aus der Messwertnahme unter Verwendung des Strahlungssensors 8 optimal und sehr genau auf die Kerntemperatur des menschlichen Körpers schließen zu können. Es muss deshalb je nach Messort in die eine oder andere Betriebsart des Strahlungsthermometers 2 umgeschaltet werden, wobei der betreffende zu der jeweiligen Betriebsart bzw. dem intendierten Messort gehörige Algorithmus gewählt wird. Hierfür ist eine Stelleinrichtung 18 zur Vorgabe des zu der betreffenden Arbeitsposition der abschirmenden Komponente 10 gehörigen Algorithmus vorgesehen und schematisch angedeutet. Vorteilhafterweise wird die Stelleinrichtung nicht separat manuell betätigt, sondern die Betätigung, d. h. die Umschaltung auf den betreffenden korrekten Mechanismus, erfolgt automatisch bei, d. h. im Zuge des Verbringens der abschirmenden Komponente 10 in ihre betreffende Arbeitsstellung. Dies kann wie eingangs ausgeführt auf verschiedene Weise realisiert werden, etwa dadurch, dass beim Verbringen der abschirmenden Komponente 10 von der einen in die andere Betriebsart die Stelleinrichtung mechanisch betätigt wird.

Weiter sind Bedieneinrichtungen 20, 22 zum Ein/Ausschalten, bzw. zum Starten des Messbetriebs vorgesehen.

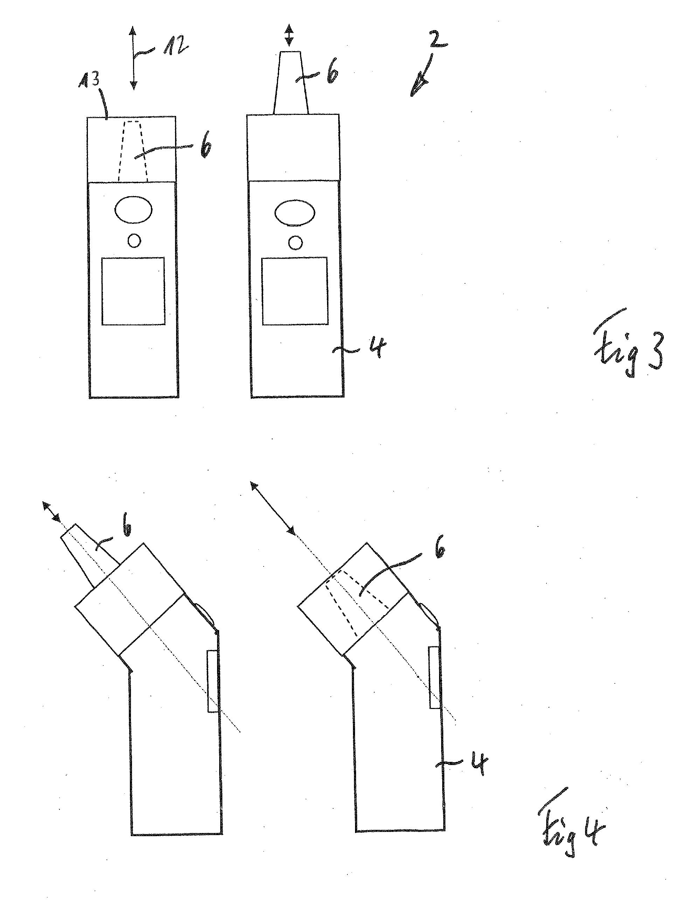

Die Figuren 3 und 4 zeigen eine weitere Ausführungsform, die sich von der in Figuren 1 und 2 gezeigten Ausführungsform nur dadurch unterscheidet, dass nicht eine abschirmende Komponente 10 zwangsgeführt gegenüber dem Thermometergehäuse 4 zwischen zwei Arbeitspositionen verbringbar ist, sondern stattdessen der Messkopf 6 zwischen zwei Arbeitspositionen in Richtung des Doppelpfeils 12 verbringbar ist. In der in Figur 3 linken Darstellung ist der Messkopf 6 in das Thermometergehäuse 4 zurückgezogen und befindet sich in einer Arbeitsposition für die Anlage an eine äußere Körperoberfläche, insbesondere an die Stirn. Dabei bildet ein Bereich des Thermometergehäuses 4 eine Strahlungsabschirmung, und das Thermometer 2 lässt sich mit einer als Anlagefläche 13 dienenden Stirnseite an die äußere Körperoberfläche, insbesondere die Stirn, zur Messwertnahme anlegen. In der in Figur 3 rechten Darstellung ist der Messkopf 6 in Richtung des Doppelpfeils 12 aus dem Thermometergehäuse 4 zwangsgeführt ausgefahren und steht somit über das Thermometergehäuse 4 vor. Das Thermometer lässt sich nun für die Ohrmessung verwenden, indem es mit seinem Messkopf 6 in die Ohröffnung eingeführt wurde. Die weiteren im Zusammenhang mit Figuren 1 und 2 beschriebenen Komponenten der Recheneinrichtung, Displayeinrichtung und Stelleinrichtung sind bei dieser Ausführungsform ebenfalls vorgesehen.

Des Weiteren zeigen die Figuren 1 bis 4, dass das jeweilige Thermometergehäuse 4 einen mit der Hand des Benutzers manuell ergreifbaren oder umgreifbaren Gehäusebereich 22 und einen messkopfseitigen Gehäusebereich 23 aufweisen, die gegeneinander geneigt sind. Auf diese Weise lässt sich eine ergonomische Handhabbarkeit des Thermometers 2 erreichen. Im beispielhaft und bevorzugt dargestellten Fall beträgt ein Neigungswinkel α zwischen den Gehäusebereichen zwischen 40 und 50°, insbesondere etwa 45° (Figur 2). Hiefür wurden in Figur 2 Längsmittelachsen eingezeichnet, welche den Neigungswinkel α zwischen den Gehäusebereichen 22, 23 verdeutlichen sollen.

Hierbei erweist es sich als besonders vorteilhaft, wenn die zwangsgeführte Anordnung der den Messkopf 6 abschirmenden Komponente 10 oder die zwangsverschiebliche Anordnung des Messkopfs 6 selbst an dem messkopfseitigen Gehäusebereich 23 realisiert ist, so dass der umgreifbare messkopfabgewandte Gehäusebereich 22 im Hinblick auf die Ergonomie beim Ergreifen des Thermometers optimiert ausgelegt werden kann.

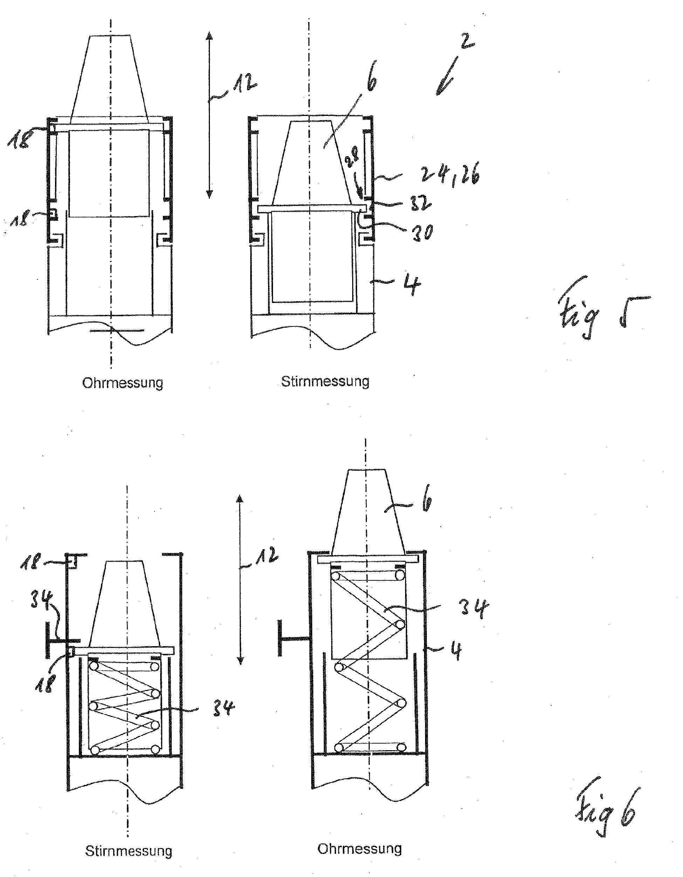

Figuren 5 und 6 verdeutlichen schematisch zwei beispielhafte Verstellmechanismen, die hier beispielhaft und nicht einschränkend zum Verstellen des Messkopfs 6 zwischen zwei Arbeitspositionen ausgestaltet sind. Sie könnten bei einer alternativen nicht dargestellten Ausführungsform entsprechend zum Verstellen einer den Messkopf abschirmenden Komponente zum Einsatz kommen. Bei Figur 5 ist am Thermometergehäuse 4 ein hülsenförmiges manuell drehbares Betätigungsorgan 24 in Form einer Drehhülse 26 vorgesehen. Die Drehhülse 26 ist für den bestimmungsgemäßen Gebrauch des Thermometers 2 unverlierbar am Thermometergehäuse 4 drehbar. Im Inneren der Drehhülse 26 ist eine Kulissenführungseinrichtung 28 ausgebildet und schematisch dargestellt. Der Messkopf 6 bildet einen Teil dieser Kulissenführungseinrichtung 28, indem er mit einem schematisch angedeuteten radialen Vorsprung 30 in eine Kulissenbahn 32 an der Innenseite der Drehhülse 26 eingreift. Bei Verdrehung der Drehhülse 26 wird der Messkopf 6 in Richtung des Doppelpfeils 12 zwischen den Arbeitspositionen hin und her verschoben.

Bei dem in Figur 6 dargestellten Mechanismus ist eine Federvorspannung unter Verwendung einer Druckfeder 34 realisiert, welche den Messkopf 6 in Richtung auf die in Figur 6 rechts dargestellte Arbeitsposition vorspannt, in der der Messkopf 6 aus dem Thermometergehäuse 4 ausgefahren ist für die Durchführung einer Ohrmessung. Hiervon ausgehend kann der Messkopf 6 beispielsweise lediglich durch Druck auf seine Stirnseite in Richtung des Doppelpfeils 12 in die in Figur 6 links dargestellte Position in das Thermometergehäuse 4 eingefahren werden. Dabei ist der Messkopf 6 in der in Figur 6 links dargestellten eingefahrenen Arbeitsposition selbsthemmend fixierbar, indem dort beispielsweise ein schematisch dargestelltes Rastorgan 34 vorgesehen ist, welches beim Einfahren des Messkopfs 6 zunächst verdrängt und dann in eine Rastposition, insbesondere federvorgespannt, gelangt.

In Figuren 5 und 6 ist weiter schematisch angedeutet eine Stelleinrichtung zur automatischen Vorgabe des zu der betreffenden Arbeitsposition des Messkopfs 6 gehörigen Algorithmus. Es sind hier beispielhaft zwei Stelleinrichtungen 18 jeweils in der Darstellung links angedeutet, die beispielhaft durch den Messkopf selbst betätigt werden, wenn der Messkopf in die jeweilige eine oder andere Arbeitsposition gebracht wird. Hierdurch ist sichergestellt, dass der korrekte Algorithmus in der Recheneinrichtung ausgewählt wird.

## Patentansprüche

1. Elektronisches Strahlungsfieberthermometer (2) für die nichtinvasive Temperaturmessung am menschlichen Körper, mit einem Thermometergehäuse (4), mit einem einen Strahlungssensor (8) zur Erfassung einer Temperatur umfassenden Messkopf (6) und mit einer elektronischen Recheneinrichtung (14), die aus einem Messwert des Strahlungssensors (8) einen Wert der Körpertemperatur ermittelt, der mittels einer Anzeigeeinrichtung (16) anzeigbar ist, wobei das Thermometer zur Temperaturmessung an zwei voneinander verschiedenen Stellen am menschlichen Körper, insbesondere im Ohr und auf der Stirn, ausgebildet ist, wofür in der elektronischen Recheneinrichtung (14) verschiedene Auswertealgorithmen vorgesehen sind, **dadurch gekennzeichnet, dass** entweder der Messkopf (6) zwischen einer ersten Arbeitsposition zur Temperaturmessung an der ersten Stelle und einer zweiten Arbeitsposition zur Temperaturmessung an der zweiten Stelle gegenüber dem Thermometergehäuse (4) zwangsgeführt verbringbar ist oder dass eine den Messkopf (6) gegen Streustrahlung abschirmende Komponente (10) zwischen einer ersten Arbeitsposition zur Temperaturmessung an der ersten Stelle und einer zweiten Arbeitsposition zur Temperaturmessung an der zweiten Stelle gegenüber dem Thermometergehäuse (4) und dem Messkopf (6) zwangsgeführt verbringbar ist, und dass beim Verbringen des Messkopfs (6) oder der abschirmenden Komponente (10) in die eine oder andere Arbeitsposition der zu der betreffenden Arbeitsposition gehörige Algorithmus bei der Recheneinrichtung (14) automatisch durch eine Stelleinrichtung (18) vorgegeben wird.

2. Strahlungsfieberthermometer nach Anspruch 1, **dadurch gekennzeichnet, dass** über eine Ausgabeeinrichtung eine Meldung an den Benutzer erfolgt, wenn der zu der betreffenden Arbeitsposition gehörige Algorithmus bei der Recheneinrichtung (14) automatisch durch die Stelleinrichtung (18) vorgegeben ist.

3. Strahlungsfieberthermometer nach Anspruch 1 oder 2, **dadurch gekennzeichnet, dass** eine Betriebsfreigabe für die Messwertnahme durch die Stelleinrichtung (18) erst erfolgt, wenn der Messkopf (6) oder das abschirmende Mittel (10) seine betreffende erste oder zweite Arbeitsposition erreicht hat.

4. Strahlungsfieberthermometer nach Anspruch 1, 2 oder 3, **dadurch gekennzeichnet, dass** die abschirmende Komponente (10) zugleich eine Anlagefläche (13) des Thermometers gegen eine der zwei Stellen am Körper ausbildet.

5. Strahlungsfieberthermometer einem oder mehreren der vorstehenden Ansprüche, **dadurch gekennzeichnet, dass** die abschirmende Komponente (10) hülsenförmig ausgebildet ist und den Messkopf (6) umfangsseitig und/oder stirnseitig umgibt oder begrenzt.

6. Strahlungsfieberthermometer nach einem oder mehreren der vorstehenden Ansprüche, **dadurch gekennzeichnet, dass** die abschirmende Komponente (10) oder der Messkopf (6) in eine der zwei Arbeitspositionen federvorgespannt ist.

7. Strahlungsfieberthermometer nach einem oder mehreren der vorstehenden Ansprüche, **dadurch gekennzeichnet, dass** die abschirmende Komponente (10) oder der Messkopf (6) mit dem Thermometergehäuse teleskopierend angeordnet ist.

8. Strahlungsfieberthermometer nach einem oder mehreren der vorstehenden Ansprüche, **dadurch gekennzeichnet, dass** die abschirmende Komponente (10) oder der Messkopf (6) gegenüber dem Thermometergehäuse (4) verschieblich, insbesondere linear verschieblich, oder verschwenkbar oder verdrehbar angeordnet ist.

9. Strahlungsfieberthermometer nach einem oder mehreren der vorstehenden Ansprüche, **dadurch gekennzeichnet, dass** die abschirmende Komponente (10) oder der Messkopf (6) gegenüber dem Thermometergehäuse (4) über eine Kulissenführung (28) verstellbar angeordnet ist.

10. Strahlungsfieberthermometer nach einem oder mehreren der vorstehenden Ansprüche, **dadurch gekennzeichnet, dass** die abschirmende Komponente (10) oder der Messkopf (6) durch manuelle Betätigung von der einen in die andere Arbeitsposition verbringbar ist.

11. Strahlungsfieberthermometer nach einem oder mehreren der vorstehenden Ansprüche, **dadurch gekennzeichnet, dass** die Stelleinrichtung (18) zur Vorgabe des zu der betreffenden Arbeitsposition gehörigen Algorithmus entweder manuell oder durch die abschirmende Komponente (10) oder den Messkopf (6) selbst betätigbar ist.

12. Strahlungsfieberthermometer nach einem oder mehreren der vorstehenden Ansprüche, **dadurch gekennzeichnet, dass** die Stelleinrichtung (18) mechanisch, optisch, magnetisch oder elektrisch mit der abschirmenden Komponente (10) oder dem Messkopf (6) zusammenwirkt.

13. Strahlungsfieberthermometer nach einem oder mehreren der vorstehenden Ansprüche, **dadurch gekennzeichnet, dass** das Thermometergehäuse (4) einen beim bestimmungsgemäßen Gebrauch umgreifbaren Gehäusebereich (22) und einen messkopfseitigen Gehäusebereich (23) aufweist, die gegeneinander geneigt sind.

14. Strahlungsfieberthermometer nach Anspruch 15, **dadurch gekennzeichnet, dass** der umgreifbare Gehäusebereich (22) und der messkopfseitige Gehäusebereich (23) einen Neigungswinkel von 10° - 60°, insbesondere von 20° - 55°, insbesondere von 30° - 50° und weiter insbesondere von 40° - 50° zueinander einschließen.

15. Strahlungsfieberthermometer nach Anspruch 15 oder 16, **dadurch gekennzeichnet, dass** die zwangsgeführte Anordnung der den Messkopf (6) abschirmenden Komponente (10) oder die zwangsverschiebliche Anordnung des Messkopfs (6) selbst an dem messkopfseitigen Gehäusebereich (23) realisiert ist.
